# EUROPÄISCHE PATENTSCHRIFT

(11) **EP 0 396 975 B1**
(45) Veröffentlichungstag und Bekanntmachung des Hinweises auf die Patenterteilung: **25.08.1993**
(21) Anmeldenummer: 90108011.9
(22) Anmeldetag: 27.04.1990
(51) Int. Cl.: C04B 14/02

(54) **Verfahren zum Einfärben von Baustoffen**
Process for colouring building materials
Procédé pour la coloration de matériaux de construction

(30) Priorität: 10.05.1989 DE 3915182; 08.06.1989 DE 3918694
(43) Veröffentlichungstag der Anmeldung: 14.11.1990
(73) Patentinhaber: BAYER AG, 51368 Leverkusen (DE)
(72) Erfinder: Rademachers, Jakob, Dr., D-4150 Krefeld 12 (DE); Teichmann, Günther, Dr., D-4150 Krefeld 1 (DE)

(56) Entgegenhaltungen:
- DE-A- 1 592 919
- DE-A- 3 619 363
- US-A- 2 221 175

## Beschreibung

Die vorliegende Erfindung betrifft ein Verfahren zum Einfärben von Baustoffen mit anorganischen Pigmenten in Form von Mikrogranulaten, die eine durchschnittliche Partikelgröße zwischen 50 und 500 µm aufweisen.

Zement- und kalkgebundene Baustoffe wie Putze, Kalksandsteine, Faserzementteile oder Betonwerksteine, insbesondere Dach- und Pflastersteine sowie Gehwegplatten, werden in der Regel, wenn sie farbig gestaltet werden sollen, mit anorganischen Pigmenten eingefärbt. So ist es allgemein in der Baustoffindustrie üblich, Eisenoxide oder Eisenoxidhydroxide als Rot-, Schwarz-, Braun- oder Gelbpigmente, Manganoxide als Braunschwarzpigmente, Chromoxide als Grünpigmente und Titandioxide als Weißpigmente einzusetzen. Als weitere Beispiele können Ruße als Schwarzpigmente, Nickel- oder Chromrutile als Gelbpigmente und kobalthaltige Spinelle als Blau- und Grünpigmente, kupferhaltige Spinelle als Schwarzpigmente sowie die Mischkristalle aus Bariumsulfat und Bariummanganat als Blaupigmente genannt werden.

Zur Einfärbung von Betonwaren werden normalerweise die Pigmente im pulverförmigen Zustand eingesetzt. Sie haben in gemahlener Form den Vorteil der guten Dispergierbarkeit. Die vollständig homogene Verteilung solcher Pigmentpulver erfolgt in Betonmischungen in einer kurzen Zeit - bis zu wenigen Minuten. Der Nachteil dieser feinen Pulver besteht darin, daß sie kein gutes Fließverhalten aufweisen und sich beim Lagern häufig zusammenballen und verklumpen. Die genaue Dosierung wird hierdurch erschwert. Ein weiterer Nachteil einiger Pulver besteht darin, daß sie zum Stauben neigen.

Es ist bekannt, daß diese Nachteile bei der Pigmentierung von Betonteilen vermieden werden können, indem man anstelle trockener Pigmentpulver wässerige Pigmentsuspensionen einsetzt. Die Verwendung derartiger 30 bis 70 Gew.-% Pigment enthaltenden Pasten oder Slurries hat sich nur zögernd durchsetzen können. Denn durch den zusätzlichen Wassergehalt können je nach Entfernung von Herstell- und Einsatzort erheblich höhere Transportkosten auftreten. Auch kann die mitgelieferte große Wassermenge nicht in jeder Betonzubereitung verarbeitet werden.

Die Baustoffindustrie ist deshalb größtenteils bei dem Einsatz trockener Pigmentpulver geblieben. Der Verwendung von Pigmenten in Form von Mikrogranulaten, wie es aus der Kunststoff- und Lackindustrie bekannt ist, stand bisher die Meinung entgegen, derartige Granulate mit Durchmessern von 25 bis 600 µm seien in Beton zubereitungen weniger gut dispergierbar. Schwer dispergierbare Pigmentagglomerate erfordern wesentlich längere Mischzeiten. Bei den normalen, in der Baustoffindustrie üblichen kurzen Mischzeiten treten infolge schlechter Pigmentverteilung an der Betonoberfläche Stippen, Streifen oder Farbnester auf. Die im Pigment enthaltene Farbstärke kann sich nicht entfalten, so daß bei gleicher Farbintensität des Betonwerkstückes größere Pigmentmengen aufgewendet werden müssen.

In der DE-C 36 19363 werden für die Einfärbung von Betonwaren Pigmentgranulate beschrieben, die im wesentlichen aus Pigment und einem oder mehreren die Dispergierung des Pigmentes im Beton fördernden Bindemittel(n) bestehen. Als Bindemittel, die in Beton als Dispergierhilfsmittel arbeiten, werden genannt: Alkylbenzolsulfonat, Alkylnaphthalinsulfonat, Ligninsulfonat, sulfatierte Polyglykolether, Melaminformaldehydkondensate, Naphthalinformaldehydkondensate, Glukonsäure, Salze von niedrigmolekularen teilveresterten Styrol-Maleinsäureanhydrid-Copolymerisaten und Copolymere aus Vinylacetat und Krotonsäure. Der Anteil im Pigment soll bevorzugt 2 bis 6 Gew.-%. betragen.

Die genannten Dispergierhilfsmittel wirken in Betonmischungen als Verflüssiger. Sie beeinflussen das Wasser-Zement-Verhältnis und wirken sich auf die Betonkonsistenz aus.

Im anorganischen Pigment selbst stellen die zugesetzten Bindemittel als organische Substanzen Fremdkörper dar.

Die Aufgabe der vorliegenden Erfindung besteht nun darin, zum Einfärben von Baustoffen gut fließende, nicht staubende anorganische Pigmentmikrogranulate zur Verfügung zu stellen, die die beschriebenen Nachteile des Standes der Technik nicht aufweisen.

Diese Aufgabe wurde gelöst durch ein Verfahren zur Einfärbung von Baustoffen mit anorganischen Pigmenten in Form von Mikrogranulaten, die eine durchschnittliche Partikelgröße zwischen 50 und 500 µm aufweisen, wobei die Mikrogranulate aus einem oder mehreren Pigmenten und aus Verbindungen des Bors, Aluminiums, Siliciums, Titans, Zinks und/oder Zinns bestehen. Dieses Verfahren ist Gegenstand dieser Erfindung.

Es hat sich nämlich überraschenderweise gezeigt, daß diese rein anorganische Zusätze enthaltenden Pigmentmikrogranulate vergleichbare Dispergiereigenschaften in Betonzubereitungen aufweisen wie Pigmentgranulate mit in Betonzubereitungen wirkenden Verflüssigern, ohne organische Substanzen aufweisen.

Mit Pigmentmikrogranulaten oder Perlgranulaten werden solche Granulate bezeichnet, die über Sprühtrocknen aus Pigmentsuspensionen erhältlich sind. Sie können im Sprühtrockner über langsam laufende Zentrifugalzerstäuber oder über Druckdüsen (Einstoffdüsen) oder über Zweistoffdüsen mit niedrigen Luft-Flüssigkeitsverhältnissen hergestellt werden.

Während die Zweistoffdüse Partikel mit Durchmessern bis zu 200 µm liefert, können mit der Zerstäuberscheibe gröbere Partikel bis maximal 300 µm hergestellt werden. Bei Verwendung von Druckdüsen werden die gröbsten Einzelpartikel bis 600 µm mit relativ enger Korngrößenverteilung erhalten. Über Sprühtrockner mit integriertem Fließbett kann man Sekundäragglomerate erzielen, die über die genannten Durchmesser hinausgehen.

Die erfindungsgemäß zugesetzten Verbindungen können bevorzugt in Form von Oxiden und/oder Hydroxiden vorliegen. Sie können aber auch aus Boraten, Aluminaten, Silikaten, Titanaten, Zinkaten und/oder Stannaten bestehen, die entweder in dieser Form oder auch als diese Verbindungen bildende Substanzen den Pigmenten zugesetzt werden. So ist es beispielsweise möglich, beim Herstellungsprozeß zersetzliche, Oxide bildende Verbindungen einzusetzen, wie es bei Titan- oder Kieselsäureestern der Fall ist.

In einer besonderen Ausführungsform des erfindungsgemäßen Verfahrens sind die zugesetzten Verbindungen Kieselsol oder Wasserglas. Hierbei handelt es sich um Substanzen, die ohnehin als Bestandteile des Betons auftauchen.

Die Menge der erfindungsgemäß zugesetzten Verbindungen kann, auf Pigment bezogen, 0,05 bis 5,0 Gew.-%, vorzugsweise 0,1 bis 1 Gew.-%, als Oxid gerechnet, betragen. Kleinere Mengen zeigen keine Wirksamkeit, größere Mengen können zu Dispergierschwierigkeiten führen. Die Verbindungen können in Form ihrer Lösungen, als Kolloide oder auch als Suspensionen im gesamten Herstellungsprozeß der Granulate, auch bereits bei der eigentlichen Pigmentbildung zugesetzt werden.

Es hat sich gezeigt, daß die erfindungsgemäßen Granulate eine vom Pigment abhängige Partikelgröße nicht überschreiten sollten. Diese ist in erster Linie abhängig vom Schüttgewicht des Granulates, das wiederum ein Maß für die Porosität der Partikel darstellt. Die Porosität wiederum ist abhängig vom Feststoffgehalt der pumpfähigen Ausgangssuspension vor dem Trocknen, die in Abhängigkeit von Teilchengröße und Teilchenform des Pigments stark schwanken kann. Als Maß für das Schüttgewicht dient das in der DIN 53 194 vom August 1957 definierte Stampfvolumen bzw. Stampfgewicht. Die erfindungsgemäßen Pigmentgranulate zeichnen sich dadurch aus, daß sie bei der Bestimmung des Stampfgewichtes nicht zerfallen. Bevorzugt weisen die erfindungsgemäßen Granulate ein Stampfgewicht zwischen 0,5 und 2,5 g/ml, besonders bevorzugt 0,8 bis 1,5 g/ml, auf.

Auch sollte die Partikelgröße nicht zu niedrig gewählt werden, da die feinen Anteile unter etwa 50 µm - abhängig von den Pigmenteigenschaften - für das Stauben eines trockenen Pulvers verantwortlich sind. Zudem wird mit Zunahme dieses Anteils die Riesel- oder Fließfähigkeit verschlechtert.

Die nach der Erfindung beanspruchten Granulate liegen in ihrer durchschnittlichen Partikelgröße zwischen 50 und 500 µm, vorzugsweise zwischen 100 und 300 µm.

Die Pigmentmikrogranulate dieser Partikelgröße stellen handhabungsstabile, nicht staubende, gut rieselfähige Pulver dar, die im Verein mit den erfindungsgemäßen Zusätzen für die Einfärbung von Baustoffen gut geeignet sind. Im Gegensatz zur bisherigen Meinung (DE-C 36 19363) reichen die Scherkräfte in Betonzubereitungen auf die Granulate für die vollständige Pigmentdispergierung während des Mischzyklus aus.

Die in den erfindungsgemäßen Granulaten enthaltenen anorganischen Pigmente sind bevorzugt Eisen-, Chrom-, Mangan- und /oder Titanoxide.

Besonders gute Ergebnisse werden mit Eisenoxid-Pigmenten erzielt.

Das Stampfgewicht der Granulate kann je nach Pigment, Zusatzart und -menge und Wassergehalt der Suspension schwanken. Niedrige Stampfgewichte führen zu wenig stabilen Granulaten, hohe Stampfgewichte zu schlechter Dispergierbarkeit. Die erfindungsgemäßen Eisenoxidschwarzgranulate weisen bevorzugt Stampfgewichte zwischen 0,8 und 1,0 g/ml, Eisenoxidrotpigmentgranulate zwischen 1,2 und 1,4 g/ml, auf.

Die erfindungsgemäßen Granulate enthalten normalerweise um 1 Gew.-% Wasser. Je nach Pigmentfeinheit und Teilchenform kann der Wassergehalt höher liegen, ohne daß die Rieselfähigkeit negativ beeinflußt wird. So können Eisenoxidrotpigmentgranulate mit einem Zusatz an 0,15 Gew.-% SiO₂ in Form von Natriumsilikat ohne Nachteile 6 Gew.-% Wasser enthalten. Der Wassergehalt sollte 10 Gew.-% nicht überschreiten.

Das Verfahren der Erfindung soll an folgenden Beispielen näher erläutert werden; es ist darin jedoch keine Einschränkung auf die Beispiele zu sehen.

Im Falle der aufgeführten Beispiele wurde die Bestimmung der Fließfähigkeit mit dem DIN-Becher 4 (DIN 53211 vom April 1974) als Auslaufzeit analog auf die zu prüfenden Granulate angewandt.

Die Prüfung der Dispergierbarkeit in Beton erfolgte über die Farbstärkemessung an mit Weißzement hergestellten Prismen bei folgenden Daten: Zement-Quarzsand-Verhältnis 1 : 4, Wasser-Zement-Wert 0,35, Pigmentierungshöhe 1,2 %, bezogen auf Zement, verwendeter Mischer von RK Toni Technik, Berlin, mit 5 l Mischschüssel, Bauform 1551, Drehzahl 140 U/min (Ansatz: 500 g Zement). Nach je 30, 40, 50, 60, 70 und 80 Sekunden wurden 4 Mischungsproben (300 g) entnommen und Probekörper (5 x 10 x 2,5 cm) unter Druck (32,5 N/mm²) hergestellt. Härtung der Probekörper: 24 Std. bei 30°C und 95 % rel. Luftfeuchte mit anschließendem Trocknen 24 Stunden bei 50°C. Farbdatenmessung über Hunterlab-Gerät: 3 Meßpunkte je Ober- und Unterseite, pro Pigmentmischung 24 Meßpunkte. Die erhaltenen Mittelwerte werden in bezug zu der Probe mit 80 Sekunden Mischzeit (Endfarbstärke = 100 %) gesetzt.

Zur weiteren Prüfung der Dispergierbarkeit wurden Mischungen in einem größeren, 80 kg fassenden "Zyklos"-Mischer durchgeführt. Hierbei wurde zuerst Sand und Zement trocken vorgemischt (30 Sekunden) und erst nach Wasserzugabe und weiterem Mischen (ebenfalls 30 Sekunden) das Pigmentgranulat zugesetzt. Die hierbei erhaltenen Resultate, gemessen an Betondachsteinen, entsprechen im Dispergierverhalten den Ergebnissen aus dem kleinen Labormischer.

### Beispiel 1

Einem Sprühtrockner wurden stündlich 40 kg einer wäßrigen Suspension von Eisenoxidschwarz, die als Zwischenprodukt bei der Herstellung von Eisenoxidschwarz Bayferrox 330 (Handelsprodukt der Bayer AG) anfällt, zugeführt. Der etwa 50 Gew.-% Eisenoxid in Form von feinteiligem Magnetit enthaltenden Paste wurden, auf Eisenoxid bezogen, 1 Gew.-% Natronwasserglaslösung mit 360 g/l SiO₂ zugesetzt.

Diese Suspension gelangte mit Druck von 4 bar auf die im Trockner installierte Hohlkegeldüse (Sprühwinkel 30° , Bohrung 1,1 mm). Vom Erdgas-Flächenbrenner traten die Verbrennungsgase mit einer Temperatur von 480°C in den Sprühtrockner. Die Austrittstemperatur der Gase lag bei 140°C.

Es wurden stündlich 20 kg Eisenoxidschwarzpigment in mechanisch stabiler Granulatform mit einer durchschnittlichen Partikelgröße von 200 µm und einer Restfeuchte von etwa 1 Gew.-% erhalten. Das Stampfgewicht der Granulate betrug 0,93 g/ml. Das Fließverhalten war mit einer Auslaufzeit von 64 Sekunden aus dem 4 mm-DIN-Becher sehr zufriedenstellend. Die Prüfung auf Dispergierbarkeit an Betonprismen durch Messung der Farbstärkeentwicklung mit zunehmender Mischzeit bis 80 Sekunden zeigte bereits nach 30 Sekunden Mischzeit eine Farbstärkeentwicklung von über 85 %, nach 40 Sekunden bereits die Endfarbstärke, die sich bis 80 Sekunden Mischzeit nicht mehr veränderte.

Vergleichsweise wurde das normale Pigmentpulver (Eisenoxidschwarz Bayferrox 330) in derselben Versuchsserie mitgetestet. Hierbei erreichte das Pulver nach 60 Sekunden die Farbstärke, die sich nach einer Mischzeit bis 80 Sekunden nicht mehr veränderte. Bei einer Mischzeit von 40 Sekunden war erst 80 % der Endfarbstärke entwickelt.

### Beispiel 2

Es wurde verfahren wie in Beispiel 1 mit Abänderungen des Zusatzes zur Eisenoxidschwarz-Suspension. Anstelle von Natronwasserglas wurden, auf Pigment bezogen, 1 Gew.-% Kieselsol mit 30 Gew.-% SiO₂ zugesetzt.

Die erhaltenen stabilen Granulate lagen in der Partikelgröße zwischen 150 und 250 µm, ihre Restfeuchte bei 1,5 Gew.-%, das Stampfgewicht bei 0,92 g/ml und die Auslaufzeit aus dem DIN-Becher 4 bei 65 Sekunden. Die Endfarbstärke in Beton war nach 40 Sekunden Mischzeit erreicht.

### Beispiels 3

Der Eisenoxidschwarzsuspension aus Beispiel 1 wurde Natriumaluminat mit 2 Gew.-% Al₂O₃, auf Eisenoxidschwarzpigment bezogen, zugesetzt. Sonst wurde verfahren wie in Beispiel 1.

Die erhaltenen handhabungsstabilen Granulate lagen im Partikeldurchmesser bei 200 µm, ihre Restfeuchte betrug 1,9 %, das Stampfgewicht lag bei 0,90 g/ml und die Auslaufzeit bei 70 Sekunden.

In der Prüfung des Dispergierverhaltens wurde die Endfarbstärke nach einer Mischzeit von 50 Sekunden erreicht.

### Beispiel 4

Der Eisenoxidschwarzsuspension wurden Kieselsäuretetraethylester in Höhe von 1 Gew.-%, auf Pigment bezogen, zugesetzt. Die übrige Verfahrensweise blieb wie in Beispiel 1 unverändert. Die hierbei erhaltenen festen Granulate lagen in der Partikelgröße bei 200 µm, ihr Feuchtigkeitsanteil betrug 1,5 Gew.-%, ihr Stampfgewicht 0,94 g/ml, und die Auslaufzeit aus dem DIN-Becher lag bei 57 Sekunden. Die Endfarbstärke wurde nach 50 Sekunden Mischzeit erhalten.

### Beispiel 5

Anstelle von Kieselsäureester aus Beispeil 4 wurde Tetraethylorthotitanat in Höhe von 1 Gew.-%, auf Eisenoxid bezogen, zugegeben.

Die stabilen Granulate lagen in der Partikelgröße bei 200 µm, in der Restfeuchte bei 1,3 Gew.-%, im Stampfgewicht bei 0,90 g/ml. Die Auslaufzeit aus dem DIN-Becher wurde mit 63 Sekunden bestimmt, die Endfarbstärke trat nach 40 Sekunden Mischzeit auf.

### Beispiel 6

Die zur Trocknung gelangte Suspension bestand aus 100 kg Eisenoxidrot Bayferrox 130 (Handelsprodukt der Bayer AG) in 65 l Wasser, der 0,5 kg Natronwasserglas mit 360 g/l SiO₂ zugesetzt wurden. Die weiteren Verfahrensbedingungen blieben wie in Beispiel 1, mit Ausnahme der Aufgabemenge von stündlich 70 kg Suspension.

Die erhaltenen stabilen Eisenoxidrotgranulate lagen in der durchschnittlichen Partikelgröße bei 200 µm, ihre Restfeuchte betrug 6 Gew.-%. Das Stampfgewicht betrug 1,30 g/ml. Das Fließverhalten war bei einer Auslaufzeit aus dem DIN-Becher von 58 Sekunden sehr gut. Die Dispergierbarkeitsprüfung ergab eine Endfarbstärke in Betonprismen nach einer Mischzeit von 50 Sekunden.

### Vergleichsbeispiel

Anstelle von Wasserglas aus Beispiel 1 wurde, auf das Eisenoxidschwarzpigment bezogen, 4 Gew.-% Ammoniumligninsulfonat zugesetzt. Hierbei wurden stabile Granulate erhalten, die in der Partikelgröße bei 150 bis 250 µm lagen, eine Restfeuchte von 1,5 Gew.-% und ein Stampfgewicht von 0,97 g/ml aufwiesen. Die Auslaufzeit aus dem DIN-Becher betrug 60 Sekunden. Die Endfarbstärke wurde nach einer Mischzeit von 40 Sekunden erreicht.

Mit Dispergierhilfsmittelzusatz wurden also keine verbesserten Ergebnisse bei der Einarbeitung in Betonzubereitungen erzielt.

## Patentansprüche

1. Verfahren zum Einfärben von Baustoffen mit anorganischen Pigmenten in Form von Mikrogranulaten, die eine durchschnittliche Partikelgröße zwischen 50 und 500 µm aufweisen, dadurch gekennzeichnet, daß die Pigmentgranulate aus einem oder mehreren Pigmenten und aus Verbindungen des Bors, Aluminiums, Siliciums, Titans, Zinks und/oder Zinns bestehen.

2. Verfahren gemäß Anspruch 1, dadurch gekennzeichnet, daß die in den Granulaten enthaltenen Verbindungen in Form von Oxiden und/oder Hydroxiden vorliegen.

3. Verfahren gemäß Anspruch 1, dadurch gekennzeichnet, daß die in den Granulaten enthaltenen Verbindungen Borate, Aluminate, Silikate, Titanate, Zinkate oder Stannate sind.

4. Verfahren gemäß einem oder mehrerer der Ansprüche 1 bis 3, dadurch gekennzeichnet, daß die in den Granulaten enthaltene Verbindung Wasserglas ist.

5. Verfahren gemäß einem oder mehrerer der Ansprüche 1 bis 3, dadurch gekennzeichnet, daß die in den Granulaten enthaltene Verbindung Kieselsol ist.

6. Verfahren gemäß einem oder mehrerer der Ansprüche 1 bis 5, dadurch gekennzeichnet, daß die in den Granulaten enthaltenen Verbindungen, auf Pigment bezogen, 0,05 bis 5 Gew.-%, vorzugsweise 0,1 bis 1 Gew.-%, gerechnet als Oxide, betragen.

7. Verfahren gemäß einem oder mehrerer der Ansprüche 1 bis 6, dadurch gekennzeichnet, daß die durchschnittliche Partikelgröße der Pigmentmikrogranulate zwischen 100 und 300 µm, liegt.

8. Verfahren gemäß einem oder mehrerer der Ansprüche 1 bis 7, dadurch gekennzeichnet, daß die in den Granulaten enthaltenen anorganischen Pigmente bevorzugt Eisen-, Chrom-, Mangan- und/oder Titanoxide sind.

9. Verfahren gemäß Anspruch 8, dadurch gekennzeichnet, daß die anorganischen Pigmente Eisenoxidpigmente sind.

10. Verfahren gemäß einem oder mehrerer der Ansprüche 1 bis 9, dadurch gekennzeichnet, daß die eingesetzten Granulate einen Wassergehalt von 0,1 bis 10 Gew.-%, vorzugsweise 0,2 bis 2 Gew.-%, aufweisen.

11. Verfahren gemäß einem oder mehrerer der Ansprüche 1 bis 10, dadurch gekennzeichnet, daß die eingesetzten Granulate ein Stampfgewicht zwischen 0,5 und 2,5 g/ml, vorzugsweise 0,8 und 1,5 g/ml, aufweisen.

## Claims

1. A process for pigmenting building materials with inorganic pigments in the form of microgranules with an average particle size of 50 to 500 µm, characterized in that the pigment granules consist of one or more pigments and of compounds of boron, aluminium, silicon, titanium, zinc and/or tin.

2. A process as claimed in claim 1, characterized in that the compounds contained in the granules are present in the form of oxides and/or hydroxides.

3. A process as claimed in claim 1, characterized in that the compounds contained in the granules are borates, aluminates, silicates, titanates, zincates or stannates.

4. A process as claimed in one or more of claims 1 to 3, characterized in that the compound contained in the granules is waterglass.

5. A process as claimed in one or more of claims 1 to 3, characterized in that the compound contained in the granules is silica sol.

6. A process as claimed in one or more of claims 1 to 5, characterized in that the compounds contained in the granules make up 0.05 to 5% by weight and preferably 0.1 to 1% by weight, based on pigment.

7. A process as claimed in one or more of claims 1 to 6, characterized in that the particle size of the pigment microgranules is between 100 and 300 µm.

8. A process as claimed in one or more of claims 1 to 7, characterized in that the inorganic pigments contained in the granules are preferably iron, chromium, manganese and/or titanium oxides.

9. A process as claimed in claim 8, characterized in that the inorganic pigments are iron oxide pigments.

10. A process as claimed in one or more of claims 1 to 9, characterized in that the granules used have a water content of 0.1 to 10% by weight and preferably 0.2 to 2% by weight.

11. A process as claimed in one or more of claims 1 to 10, characterized in that the granules used have a compacted bulk density of 0.5 to 2.5 g/ml and preferably 0.8 to 1.5 g/ml.

## Revendications

1. Procédé de coloration de matériaux de construction avec des pigments inorganiques sous forme de granules microscopiques qui ont un diamètre moyen de particules compris entre 50 et 500 µm, caractérisé en ce que les granules pigmentaires sont constitués d'un ou plusieurs pigments et de composés du bore, de l'aluminium, du silicium, du titane, du zinc et/ou de l'étain.

2. Procédé suivant la revendication 1, caractérisé en ce que les composés contenus dans les granules sont présents sous forme d'oxydes et/ou d'hydroxydes.

3. Procédé suivant la revendication 1, caractérisé en ce que les composés contenus dans les granules sont des borates, des aluminates, des silicates, des titanates, des zincates ou des stannates.

4. Procédé suivant une ou plusieurs des revendications 1 à 3, caractérisé en ce que le composé contenu dans les granules est le verre soluble.

5. Procédé suivant une ou plusieurs des revendications 1 à 3, caractérisé en ce que le composé contenu dans les granules est un sol de silice.

6. Procédé suivant une ou plusieurs des revendications 1 à 5, caractérisé en ce que les composés contenus dans les granules, par rapport au pigment, sont présents en proportion de 0,05 à 5 % en poids, de préférence de 0,1 à 1 % en poids, exprimé en oxydes.

7. Procédé suivant une ou plusieurs des revendications 1 à 6, caractérisé en ce que le diamètre moyen des particules des granules microscopiques de pigment se situent entre 100 et 300 µm.

8. Procédé suivant une ou plusieurs des revendications 1 à 7, caractérisé en ce que les pigments inorganiques contenus dans les granules sont de préférence des oxydes de fer, de chrome, de manganèse et/ou de titane.

9. Procédé suivant la revendication 8, caractérisé en ce que les pigments inorganiques sont des pigments d'oxyde de fer.

10. Procédé suivant une ou plusieurs des revendications 1 à 9, caractérisé en ce que les granules utilisés présentent une teneur en eau de 0,1 à 10 % en poids, de préférence de 0,2 à 2 % en poids.

11. Procédé suivant une ou plusieurs des revendications 1 à 10, caractérisé en ce que les granules utilisés présentent après tassement une masse volumique de 0,5 à 2,5 g/ml, de préférence de 0,8 à 1,5 g/ml.
